# EUROPEAN PATENT APPLICATION

(11) **EP 4 703 290 A1**
(43) Date of publication of application: **04.03.2026**
(21) Application number: 24198284.2
(22) Date of filing: 03.09.2024
(51) Int. Cl.: B65G 1/02, B65G 1/04, E04C 3/32

(54) **SYSTEMS AND METHODS FOR ELEVATED STORAGE GRIDS**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a method of elevating a storage grid (100) of an automated storage and retrieval system by using one or more pillars (500). The pillar(s) is/are configured to vertically sustain the storage grid in an elevated position, and to accommodate one or more of the storage containers (112) adapted to be stored in the storage grid.

## Description

### TECHNICAL FIELD

The disclosure relates to elevated storage grids. More particularly, it relates to a pillar or pillars for elevating a storage grid, an automated storage and retrieval system comprising an elevated storage grid and one or more said pillars, and a method of elevating a storage grid using said one or more pillars.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Storage space may be highly valuable, particularly in inner cities where the price per square meter of space may be extremely expensive. There is therefore a need to optimise the use of space in the warehouse or storage system. Additionally, warehouses typically serve as hubs of larger storage and distribution operations which may depend on smooth supply chain management in and out of the warehouse. Access stations of the warehouses, which serve as critical junctures for the transition between storage and distribution channels, therefore typically see bustling activity. However, a constant motion of workers, machinery, or vehicles, at the access points of a warehouse can lead to congestion, safety concerns, or inefficiencies in a limited space environment.

Automated storage and retrieval systems offer an optimisation of storage space. However, automated storage and retrieval systems may have an optimum height of around 5 to 10 meters. Above this height, operational inefficiencies can arise due to long digging times for deeply buried storage containers. By comparison, a typical warehouse building may have a ceiling height of 10 or more meters, especially in inner cities where ground space is more limited and buildings tend to be taller. As such, there may still be a significant amount of unutilised and inaccessible space at the top of a warehouse, which equates to reduced storage efficiencies, higher congestion at the access stations, and lost revenue potential.

In light of these challenges, there is a growing need for solutions to minimise wasted space, optimise storage systems, streamline logistics, and improve workflow efficiency. The present disclosure concerns components, systems, and methods which address these inefficiencies in existing storage and retrieval systems. One or more aspects of the invention of the present application are set out in the claims.

### BRIEF DESCRIPTION OF THE DRAWINGS

The disclosure will now be described in more detail in connection with a number of systems, and parts thereof, shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. ₃B;
Fig. 4 shows a computing device for implementing the operations described herein;
Fig. 5 shows a side view of a storage grid, in principle similar to that of Fig. 1, elevated by side pillars as described herein;
Fig. 6 shows a side view of another pillar, with a lifting mechanism, as described herein, suitable to elevate a storage grid; and
Fig. 7 shows a perspective view of a portion of an elevated storage grid with a port as described herein.

### DETAILED DESCRIPTION

The above-referenced problems associated with existing storage and retrieval systems may be addressed by elevating a storage grid using pillars.

This disclosure is not concerned with storage grids which are positioned on an upper floor of a building. Instead, it has been realised that any wasted space at the top of a warehouse space may be utilised by raising storage grids with one or more storage grid pillars, as described herein. In this way, any unused ceiling space of a warehouse may be converted into accessible floor space, which may be extremely valuable for storage and delivery operations, material handling, or accommodating existing infrastructure.

### Overview

In overview, the disclosure relates to an automate storage and retrieval system which comprises a storage grid, one or more storage containers adapted to be stored in the storage grid, and one or more pillars that elevate the storage grid from a floor on which the one or more pillars rest. The storage grid is sustained vertically by the one or more pillars, and, importantly, each pillar is configured not only to vertically sustain the storage grid, but also to accommodate one or more of said storage containers therewithin. By 'to accommodate', we mean that each pillar is configured to receive one or more of said containers, to allow the transit and handling thereinside of one or more of said containers, and even store thereinside, if needed, one or more of said containers, and allow for said containers to be exchanged to and from the storage grid, as necessary. Accordingly, each pillar does not just perform the structural function of a pillar, that is it sustains vertically the storage grid, but, importantly, each pillar is also an integral part of the automated storage and retrieval system.

The disclosure also relates to a pillar for a storage grid of an automated storage and retrieval system as described herein. The pillar is configured to vertically sustain the storage grid in an elevated position, e.g., above a floor of a building in which the storage and retrieval system is located. In this way, the pillar may effectively lift and hold a lower end of the grid above the floor, creating an area available for other activities or structures. This feature therefore allows for an improved and more cost-effective utilisation of the height of the building, whilst the pillar is a functional part of the automated storage and retrieval system. In some examples, the pillar is configured to vertically transfer a load from an upper end of the pillar to a base of the pillar, i.e., into the ground. The load may be the maximum nominal weight of the storage grid and all the associated components of the storage grid, such as the storage containers, storable goods, robotic container-handling vehicles, vehicle chargers, etc. that may be associated with the elevated storage grid. Alternatively, the load may be a portion of the maximum nominal weight of the storage grid, particularly if the maximum load is shared between multiple pillars or with other structures in the warehouse. In either scenario, the pillar bears at least part of the total weight of the storage grid.

In addition to vertically sustaining the grid, each pillar described herein is also configured to accommodate one or more of the storage containers adapted to be in the storage grid. In this way, the pillar works alongside the storage grid and plays an active part in the storage and retrieval system, further contributing to the efficient use of space. In some pillars, the pillar is configured to provide temporary storage to stacks of storage containers from the storage grid; this, for example, may be obtained when each pillar 500 has at least an opening or gate, which is configured to receive or release one or more storage containers. The pillar may also be sized, and/or comprise internal guides, configured to facilitate the alignment and stacking of storage containers therewithin. In the context of the storage system as a whole, the temporary storage of stacks of containers in the pillars extends and increases the storage capacity of the elevated grid. Alternatively, the pillar may solely be configured to allow transit for, and/or enable access to, storage containers from the elevated storage grid. For example, the pillar may be hollow and configured to allow passage of a storage container therethrough. The transit through the pillars facilitates mobility of the containers in and out of the otherwise elevated grid. It will be appreciated that a combination of these examples is also possible, across one or multiple pillars.

The pillar may comprise, or may be built integrally with, one or more access points for accessing one or more storage containers, such as a packing station, an access column, or a port, such as those described in more detail below. One particular example is to provide shelves or buffer stations in an access column, such as described in Norwegian Patent No. 20230569, which is incorporated by reference herein. It will be appreciated that such an access column may beneficially be positioned on a pillar, since any or all side walls of the pillar may be easily accessed from a region below the elevated storage grid. Storage containers can be transferred from the elevated storage grid to an accessible region in an access column of the pillar, applying the same method as described in the aforementioned Norwegian Patent No. 20230569.

The pillar may be designed and configured to support a robotic lifting mechanism configured to lift a storage container across the vertical length of the pillar. The lifting mechanism may be any lifting mechanism known in the art. In some examples, the pillar may be designed and configured to support a crane, fixedly or moveably positioned at an upper end of the pillar, with a raisable and lowerable gripping element configured to engage the storage container. Additionally or alternatively, a robotic container-handling vehicle, such as the robots of the storage grid, may be additionally configured to also transfer storage containers in and out of the pillar, using the same systems and methods as described below in relation to the storage grid. In other examples, the robotic lifting mechanism may be an extendable arm or platform, e.g., operating upwardly from the base of the pillar.

The storage system can include any number of pillars, as necessary for vertically sustaining the storage grid. The compressive strength of the pillar may be greater than a compressive strength of any vertical members of the storage grid, sufficient to sustain the storage grid vertically whilst minimising material costs. It will be appreciated that the greater the weight of storage grid and/or the smaller the horizontal surface area of the pillar, the greater the requirement for compressive strength of the pillar. The choice of pillar size and quantity may therefore involve a cost trade off between the material cost for a pillar of sufficient strength, and the cost savings achieved by elevating the storage grid and/or enabling an open space beneath the storage grid.

In some storage systems, the storage system includes one pillar, e.g., one central pillar, or alternatively the system may comprise two, three, four, or more than four pillars. In one preferred example, four pillars are provided to support and elevate four corners of a rectangular storage grid. It will nevertheless be appreciated that the storage grid may be of a non-uniform shape and, in such examples, a pillar may be provided at each corner of the storage grid. In other examples, the pillar may be used in combination with other structures, such as a wall, a ledge, or a prop, in order to provide further support to the storage grid and/or spread out the weight distribution.

In some systems, the system may include a base, coupled to the pillars, to act as an elevated floor for the storage grid. The pillar may include lateral or side supports to further support and sustain the base and storage grid.

The pillar may comprise at least one pillar column for accommodating the one or more storage containers, e.g., the temporary storage of a stack of storage containers, or a column for transferring a storage container to or from the storage grid. In some examples, the pillar column height is greater than the height of any vertical column of the storage grid, and the respective lifting mechanisms are configured accordingly. By providing a pillar column with greater height that the height of any vertical column of the storage grid, the upper end of the pillar column can interface with the top of the storage grid, e.g., so that robotic container-handling vehicles can cross between pillar and storage grid at their respective upper surfaces, and the lower end of the pillar column can extend below the storage grid to extend the capacity and/or to enable access to storage containers from below the storage grid. As described herein, a pillar is described as extending from the uppermost portion of the storage grid to a base, in a space below the storage grid. It will however be appreciated that the pillar may similarly be coupled to the underside of a storage grid, such that a lower end of a column of the storage grid interfaces with an upper end of a column of the pillar. In such examples, the pillar column may have a length more than, less than, or the same as, a length of the column of the storage grid.

In any of the examples discussed above, by elevating the storage grid, the system as a whole may include an open space below the elevated storage grid. The open space may be configured to allow for human access, vehicular access (such as a forklift), infrastructure and/or machinery. For example, if the warehouse comprises a ten meter high ceiling, the elevated grid may be six meters tall, and the open space below the elevated grid may be four meters tall and sufficient to accommodate the operation of small vehicles. The provision of the open space directly below the storage grid effectively increases the available floor space of a warehouse, which can then be used for operations, container handling, manufacturing, cleaning, and/or for office space. In this way, the open space facilitates a valuable and increased utilisation of available space within a warehouse.

In further overview, the disclosure also relates to a method of manufacturing an automated storage and retrieval system comprising elevating a storage grid with one or more of the pillars as described herein.

### Automated storage and retrieval system overview

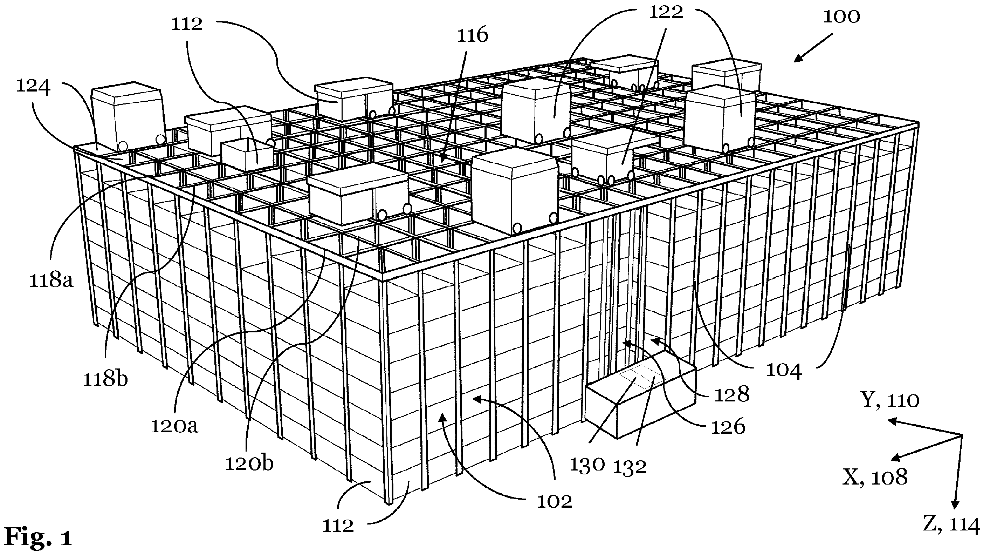

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

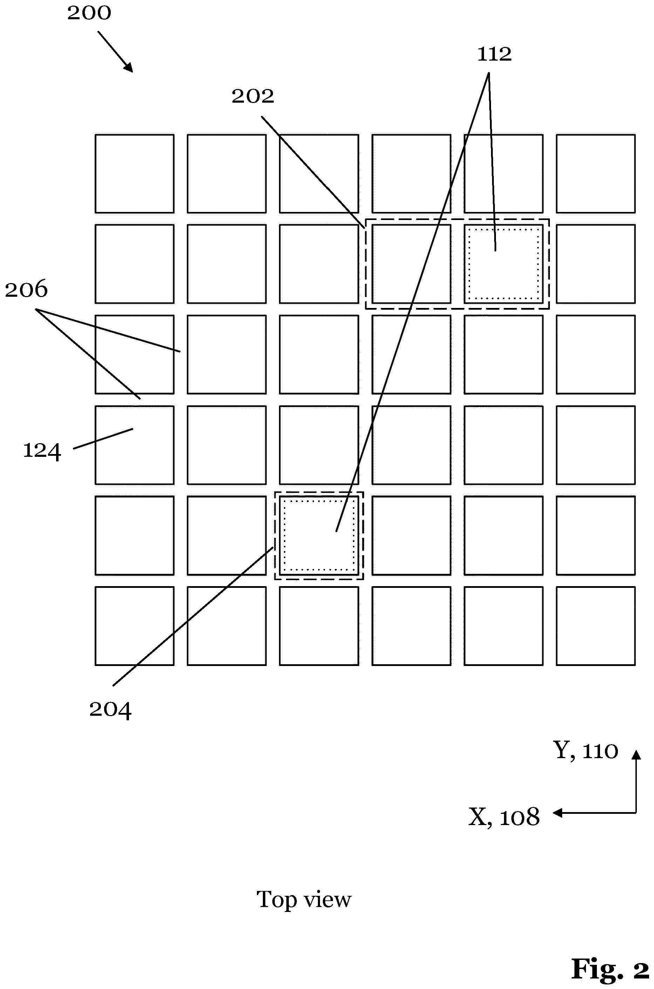

Referring to the sketch shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

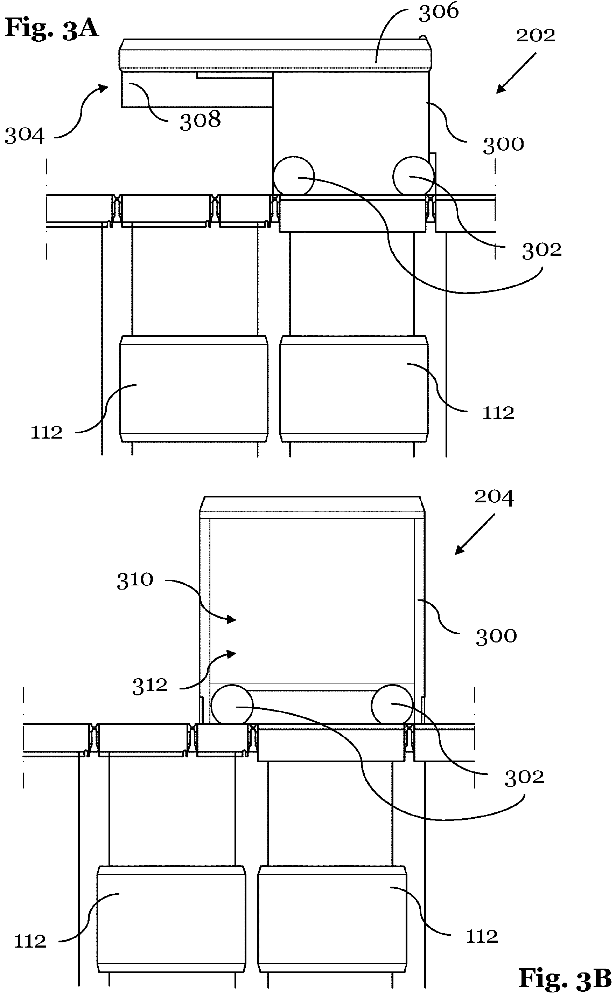

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

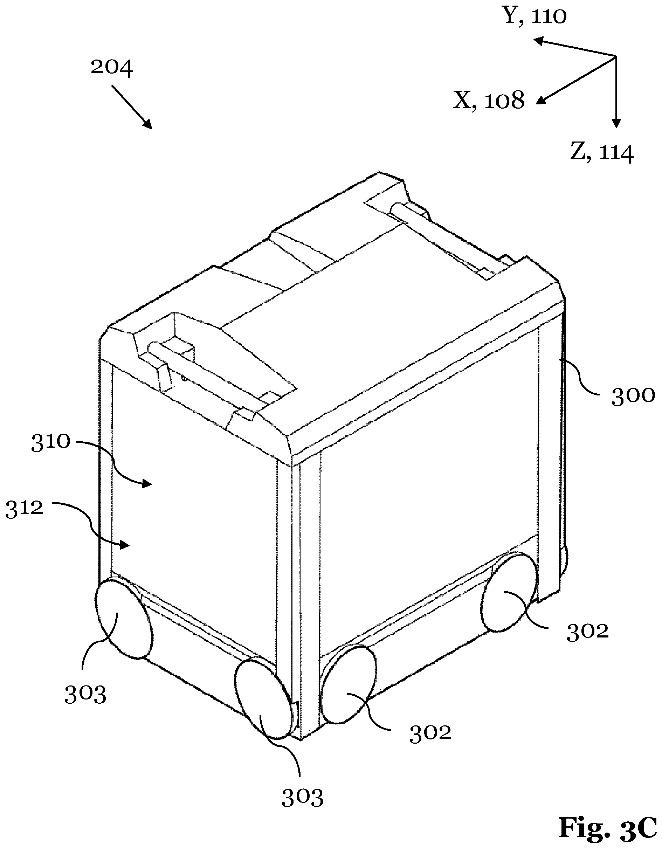

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

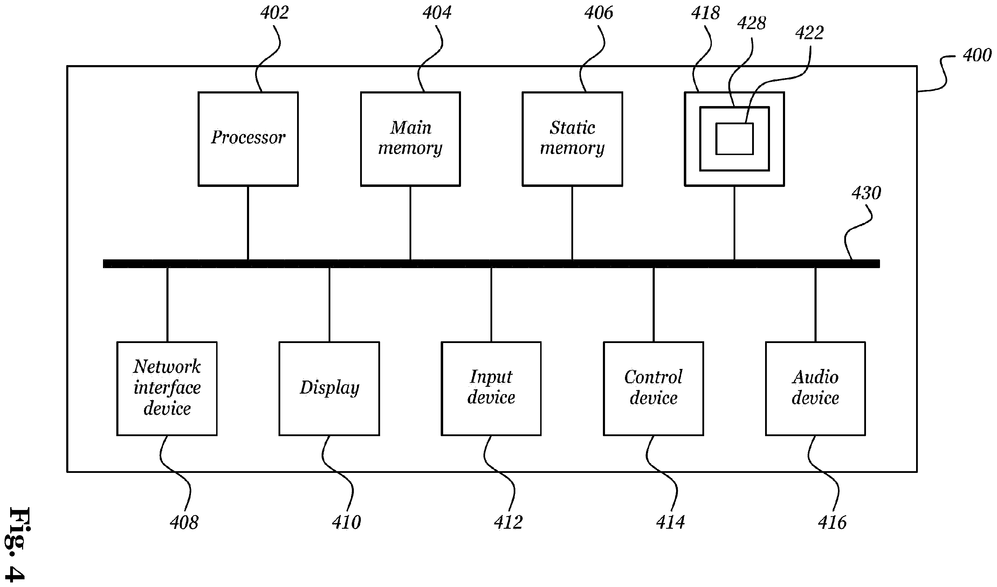

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an execution, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Elevated Storage Systems

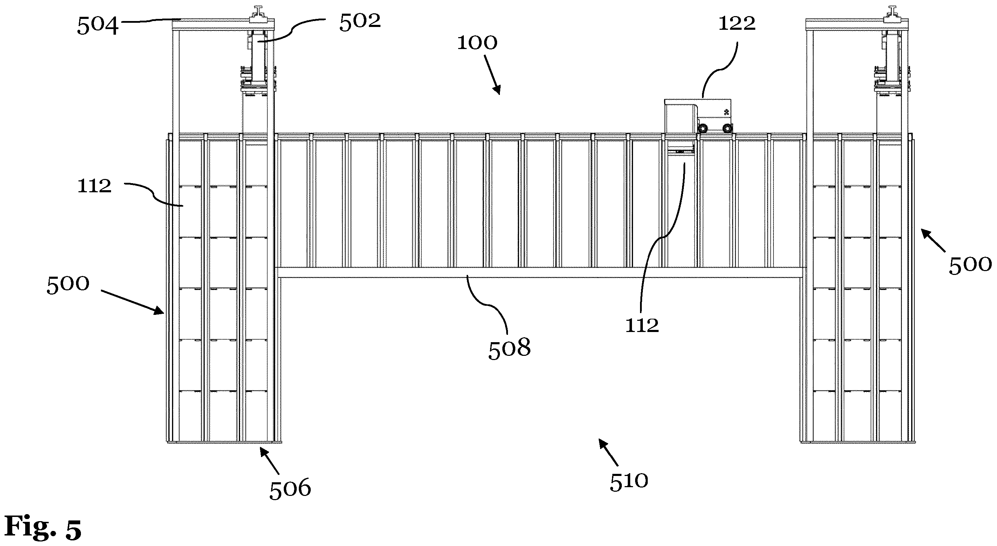

Fig. 5 illustrates a side view of a storage grid 100 elevated by pillars 500, positioned at respective corners of the storage grid. From the side illustration, two corners of the grid 100 are visible, with each corner elevated by a pillar 500 comprising pillar columns 506 for storing, or at least allowing transit of, bins 112. The pillars 500 and the pillar columns 506, which extend the length of the pillar 500, each have a greater height than the storage grid 100, thereby elevating the storage grid 100 above the ground. In particular, the pillars 500 together sustain the weight of the storage grid 100 and all accompanying articles of the storage grid 100 (e.g., sustain a maximum capacity of the grid system, including but not limited to: all storage containers 112, the base 508, robots 122, and miscellaneous articles such as charging stations).

The methods and operation for storing containers 112 in pillar columns 506 may be the substantially the same as the methods and operation for storing containers 112 in the storage grid 100. With reference to Fig. 5, each pillar 500 is provided with a crane 502 to act as a lifting structure for bins 112. The crane 502 is provided on tracks 504 such that the crane is mobile and may navigate the top of the pillar 500 to switch between the pillar columns 506. Due to the extended length of the pillar columns 506, a lifting mechanism of the pillar 500 requires a suitable loading strength and extension. For example, the crane 502 has high loading strength capabilities to dig storage containers 112 from deep within a storage column. It will nevertheless be appreciated that robots 122 may also be suitable, or be rendered suitable, for operation on both grid 100 and pillar 500. For example, existing robots 122 of the storage grid 100 (i.e., prior to elevation of the grid) may either have a sufficiently high load tolerance or may be modified with stronger and suitable lifting mechanisms (e.g., higher tolerance gripping elements or cantilevers). In either case, the robots 122 may be configured to lift bins 122 in and out of the pillar 500.

With reference to Fig. 5, for a transfer of a bin 112 from the storage grid 100 to the pillar column 506, or vice versa, there may be a transfer region at an upper level of the pillar 500 or storage grid 100, which is accessible by both crane 502 and robot 122. In this way, to store a bin 112 in the pillar 500, a robot 122 can retrieve or dig the bin 122 from the storage grid 100 and transfer the bin 112 to the transfer region. The bin 112 may then then retrieved by the crane 502, which engages and transfers the bin into a desired or available location in the pillar 500. It will be appreciated that this method works similarly between any forms of lifting mechanism, such as between two or more robots, container handling vehicles, drones, or cranes.

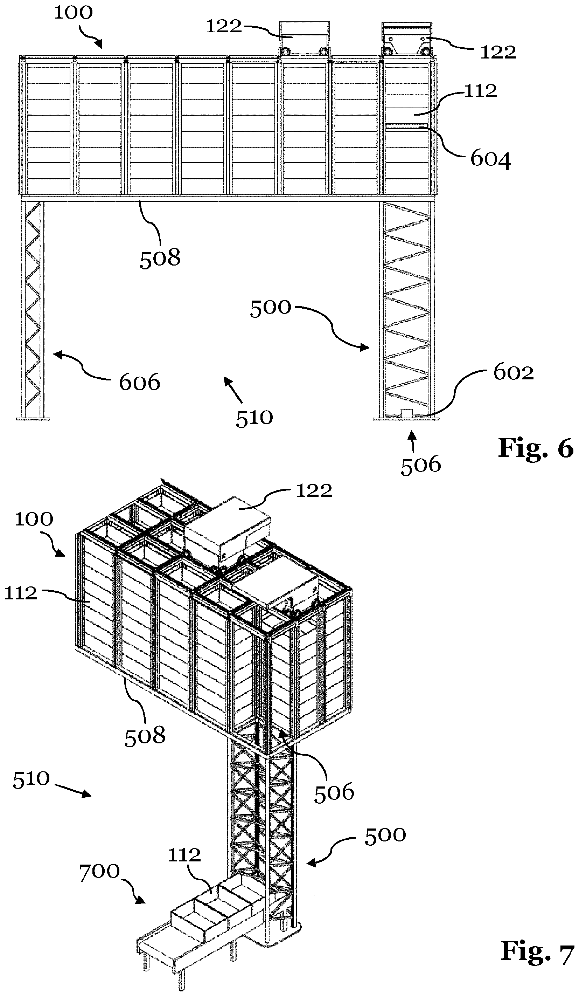

In Figs. 5, 6 and 7, the system further includes a base 508, positioned beneath the storage grid 100 and coupled with the pillars 500. The base 508 provides a floor, and more particularly an elevated floor, for the storage grid 100 to support the stacks of bins 112 therein. The key distinction between the system of Fig. 5 and those shown in Figs. 6 and 7 is that, in the case of the system of Fig. 5, the system may be considered, in principle, similar to a conventional system, in which, however, potential storage space below the base 508 has been sacrificed; this is enabled by the introduction of extra strength (compared to a conventional system) in those portions of the conventional system which now constitute the pillars 500 described herein, on each side of the elevated grid 100. In the cases of the systems shown in Figs. 6 and 7, different pillars 500 have been introduced: more specifically, these pillars 500 have a new design and structure compared to the pillars 500 of Fig. 5, which instead have essentially the same structure and design of a conventional system, though they can sustain additional weight and may span a greater height. These new pillars 500, similar to the pillars 500 of the system of Fig. 5, still provide for accommodating therewithin one or more storage containers 112. Accordingly, the systems of Figs. 6 and 7 derive from a slightly different idea compared to the system of Fig. 5. In Figs. 6 and 7, the idea is that of using newly designed pillars 500 for elevating an otherwise conventional storage grid of a conventional automated storage and retrieval system. These new pillars 500 of Figs. 6 and 7 have been cleverly designed so that they can receive, allow the transit of, or even store, one or more storage containers 112. In other words, the pillars 500 can still be said to be fully and seamlessly integrated into the resulting automated storage and retrieval system.

In order to couple the pillar 500 to the grid 100, the respective profiles of the pillar 500 and the storage grid 100 are sufficiently aligned with one another to enable robots 122 to travel between the structures along respective rails of the structures (e.g., as illustrated in Fig. 5), and/or sufficiently aligned to enable smooth transfer of storage containers into the pillar column 506 (e.g., if the pillar column 506 is directly below the grid 100, as illustrated in Fig. 7). Such alignments can be achieved manually during manufacture or elevation of the grid, and may be facilitated by a base 508, supports, or guides (not shown) of the pillar 500 and the storage grid 100.

Fig. 6 depicts a pillar 500 and an alternative lifting mechanism 602. The lifting mechanism 602 includes platform 604, which is raised and lowered along the pillar 500, e.g., with a pulley and motor, or with other suitable lifting means known in the art, and is configured to receive, raise, and lower a bin 112. In this way, the robot 122 can transfer one or more bins 112 (e.g., one bin, or a stack of bins) from the storage grid 100, onto the platform 604, and into the pillar 500.

Fig. 6 further depicts a support post 606 configured to support the weight of the storage grid 100 in combination with the pillar 500. Other supports are also considered, such as walls or ledges. Alternatively, the grid 100 may only be supported by one or more pillars 500. In any case, by elevating the grid 100 with the one or more pillars 500, an open space 510 is provided directly beneath the elevated storage grid 100. Instead of filling up the floor space of a warehouse building, the storage system as illustrated in Figs. 5, 6 and 7, may include the open space 510 enables a continued use of the floor space of the warehouse building, which may be particularly valuable for efficient storage and retrieval operations.

The pillar 500 of the elevated grid system may also facilitate access to bins of the raised storage grid 100. For example, Fig. 7 illustrates one corner of a storage grid 100 elevated by one or more pillars 500, wherein the pillar 500 includes a port 700. The pillar 500 may be configured the same as discussed above, e.g., with reference to Figs. 5 and 6 respectively, and the port 700 may be the substantially the same as the port 130, 132 as discussed above. It will be appreciated that alternative ports or bin access stations are also considered, including, for example, shelves provided on the pillar 500, as described in Norwegian Patent No. 20230569.

The port 700 of the pillar 500 provides an access point within the open space 510. In this way, operators (or machines and vehicles) can access bins 112 that are stored within the elevated grid 100 more easily and efficiently from a location below the grid 100. This may facilitate a substantial increase space efficiency, as space is not required ports and access stations around the periphery of the storage grid but is instead provided for in the open space 510 beneath the storage grid 100. In other words, by optimising the use of the full height and area of a storage facility building, the grid 100 may have a larger total volume (and thus larger storage capacity) whilst still providing ease of bin 112 access at ports 700, and without compromising on the valuable floor space of the storage facility building, which may be still be used, e.g., for logistics operations or workspace.

### Penultimate comments

Further examples of the presently disclosed systems and methods include the following.

The use of a pillar to elevate a storage grid of an automatic storage and retrieval system. In some such uses, the pillar accommodates one or more storage containers from the storage grid.

An elevated automated storage and retrieval system. In some examples, the automated storage and retrieval system comprises one or more pillars and a storage grid for storing one or more storage containers, wherein the storage grid is fully elevated from a floor by said one or more pillars. In some further examples, the elevated automated storage and retrieval system comprises one or more storage containers, wherein both the one or more pillars and the grid are configured to accommodate the one or more storage containers.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A pillar for a storage grid for an automated storage and retrieval system,
wherein the pillar is configured to vertically sustain the storage grid in an elevated position; and
wherein the pillar is configured to accommodate one or more storage containers within said pillar, said one or more storage containers being also adapted to be stored in the storage grid.

2. The pillar of claim 1, wherein the pillar is configured to vertically transfer a load from an upper end of the pillar to a base of the pillar, the load being at least part of a total weight of the storage grid and of one or more of said storage containers being stored in the storage grid.

3. The pillar of claim 1 or claim 2, wherein the pillar is configured to receive, allow transit of and/or to store stacks of said storage containers.

4. The pillar of any preceding claim, wherein the pillar is built integrally with a port for accessing the one or more storage containers.

5. The pillar of any preceding claim, wherein the pillar is configured to support a robotic lifting mechanism configured to lift one of said storage containers up the vertical length of the pillar.

6. The pillar of any preceding claim, wherein the pillar is initially configured as a standalone structure configured to be coupled with the storage grid.

7. An elevated storage grid for an automated storage and retrieval system, the elevated storage grid comprising a pillar according to any one of claims 1 to 6.

8. An automated storage and retrieval system comprising:
an elevated storage grid according to claim 7,
one or more storage containers adapted to be stored in said elevated storage grid, and
one or more pillars according to any of claims 1 to 6,
wherein the elevated storage grid is sustained vertically by the one or more pillars; and
wherein the one or more pillars are configured to sustain and to accommodate said one or more storage containers.

9. The system of claim 8, wherein the one or more pillars are configured to transfer a load from the elevated storage grid into the ground, wherein the load is a maximum nominal weight associated with the elevated storage grid and the pillar itself.

10. The system of claim 8 or claim 9, wherein the one or more pillars are configured to increase a storage capacity of the storage grid.

11. The system of any of claims 8 to 10, wherein a compressive strength of the pillars is greater than a compressive strength of any vertical member of the elevated storage grid.

12. The system of any of claims 8 to 11, wherein the system comprises one and only one pillar, or wherein the system comprises three or more pillars.

13. The system of any of claims 8 to 12, wherein each pillar defines at least one pillar column for accommodating the one or more storage containers, and wherein a height of each pillar column is greater than any heights of any vertical columns for storing one or more storage containers in the elevated storage grid.

14. The system of any of claims 8 to 13, further comprising a base of the elevated storage grid, wherein the base is coupled to the bottom of the elevated storage grid.

15. The system of any of claims 8 to 14, wherein the one or more pillars and the elevated storage grid together define an open space located immediately below the elevated storage grid.

16. A method of constructing an automated storage and retrieval system, the method comprising:
elevating a storage grid for said automated storage and retrieval system using one or more pillars according to any one of claims 1 to 6.
